# FASCICULE DE BREVET EUROPEEN

(11) **EP 3 319 413 B1**
(45) Date de publication et mention de la délivrance du brevet: **23.12.2020**
(21) Numéro de dépôt: 16757685.9
(22) Date de dépôt: 06.07.2016
(51) Int. Cl.: A01G 7/06

(54) **DISPOSITIF DE DISTRIBUTION D'UN LIQUIDE**
FLÜSSIGKEITSSPENDER
LIQUID-DISPENSING DEVICE

(30) Priorité: 08.07.2015 FR 1501444
(43) Date de publication de la demande: 16.05.2018
(73) Titulaire: De Mil, Christophe, 75014 Paris (FR)
(72) Inventeur: DE MIL, Christophe, 75014 Paris (FR); REYNIER, Arnaud, 13004 Marseille (FR); REYNIER, Sylvain, 13127 Vitrolles (FR)
(74) Mandataire: Cabinet Prugneau-Schaub
(86) Numéro de dépôt international: PCT/FR2016/000115
(87) Numéro de publication internationale: WO 2017/005994

(56) Documents cités:
- CN-U- 203 735 133
- CN-Y- 2 925 074
- FR-A1- 2 839 851
- KR-A- 20140 010 762
- KR-A- 20140 022 280
- KR-A- 20140 124 474
- US-A- 4 144 673

## Description

La présente invention concerne un dispositif de distribution d'un liquide.

On connaît de nombreux dispositifs qui assurent la distribution d'un liquide au moyen d'un tuyau. C'est le cas par exemple des dispositifs proposés dans les documents suivants :
- KR 2014 0124474
- CN 2037 35133
- KR 2014 0022280
- KR 2014 0010762

Tous ces dispositifs prévoient une fixation au moyen d'un lacet qui traverse des orifices ou bien au moyen d'un organe de suspension.

Le domaine de l'invention est celui de la distribution d'un liquide à très faible débit. On utilise pour ce faire une aiguille et non plus un tuyau.

L'invention trouve une application avantageuse dans le domaine de l'arboriculture et de la viticulture. En effet, les arbres nécessitent souvent d'être traités pour assurer leur bon état sanitaire, notamment pour combattre diverses maladies, corriger des carences ou induire des réponses physiologiques vis-à-vis des circuits de sève par exemple. On citera plus particulièrement le cas de la vigne qui est très sensible à l'esca, maladie redoutable.

Pour traiter les arbres, on connaît le document FR 2 839 851 A. Ce document propose un dispositif comportant un récipient rigide qui communique avec une aiguille faisant saillie à l'extérieur de ce récipient. Le récipient est empli d'un liquide de traitement et il est fixé au tronc de l'arbre au moyen d'une sangle.

L'aiguille est introduite dans un orifice préalablement pratiqué dans le tronc. Ainsi, le liquide est distribué avec un débit très faible au sein du tronc.

Ce dispositif donne satisfaction quant aux résultats obtenus. Toutefois, il nécessite des opérations de manutention qui sont coûteuses en matière de temps. En effet, il s'agit de placer la sangle autour du récipient et de le serrer contre le tronc lors de l'installation du dispositif. Il s'agit également de retirer la sangle et de la stocker lors du retrait du dispositif. Ces opérations qui semblent anodines prennent un temps considérable lorsque l'on doit traiter un très grand nombre d'arbres.

La présente invention a ainsi pour premier objet un dispositif de distribution d'un liquide qui présente une grande facilité de mise en place et de fixation.

Selon l'invention, un dispositif de distribution d'un liquide comporte un récipient selon la revendication 1.

Ainsi, il suffit de coller cette dernière pour maintenir le récipient en place.

On remarque par ailleurs que le récipient connu est rigide. Il comporte donc une importante quantité de matière. Il s'ensuit que son coût est élevé si le dispositif est fabriqué en grande série. Il vient qu'un second objet de la présente invention est un dispositif de distribution qui soit bon marché.

Selon une caractéristique additionnelle de l'invention, le récipient est souple, la patte étant solidaire de ce récipient.

Un récipient souple ou semi-rigide contient beaucoup moins de matière qu'un récipient rigide. Il est donc moins cher.

Avantageusement, l'aiguille est fixée sur une embase solidaire du récipient.

De préférence, l'embase est soudée au récipient.

Suivant un mode de réalisation préférentiel, le récipient est formé par une pluralité de feuilles qui sont soudées à leur périphérie.

Avantageusement, la patte est formée par une bordure de l'une au moins des feuilles.

De préférence, le récipient est muni d'une protubérance sécable.

Ainsi, lorsque la protubérance est coupée, le récipient se voit adjoindre un évent.

Par ailleurs, l'extrémité libre de l'aiguille est sécable.

D'autre part, le récipient est pourvu d'un évent.

Suivant le mode de réalisation préférentiel, lorsque le récipient est disposé verticalement, aiguille en bas, l'axe de cette aiguille présente avec l'horizontale un angle d'inclinaison compris entre 0 et 45°.

La présente invention apparaîtra maintenant avec plus de détails dans le cadre de la description qui suit d'exemples de réalisation donnés à titre illustratif en se référant aux figures annexées qui représentent :
- la figure 1, un schéma d'un premier mode de réalisation de l'invention, plus particulièrement :
   ∘ la figure 1a, une vue de ¾ face du dispositif objet de l'invention,
   ∘ la figure 1b, une vue de côté de ce dispositif,
- la figure 2, un schéma d'un second mode de réalisation de l'invention, en vue de ¾ face,
- la figure 3, un schéma d'une embase selon l'invention, plus particulièrement :
   ∘ la figure 3a, une vue de face,
   ∘ la figure 3b, une vue en coupe,
- la figure 4, un schéma d'un troisième mode de réalisation de l'invention, en coupe vu de profil, et
- la figure 5, une vue de face d'un mode de réalisation présentant une caractéristique additionnelle.

Les éléments identiques présents dans plusieurs figures sont affectés d'une seule et même référence.

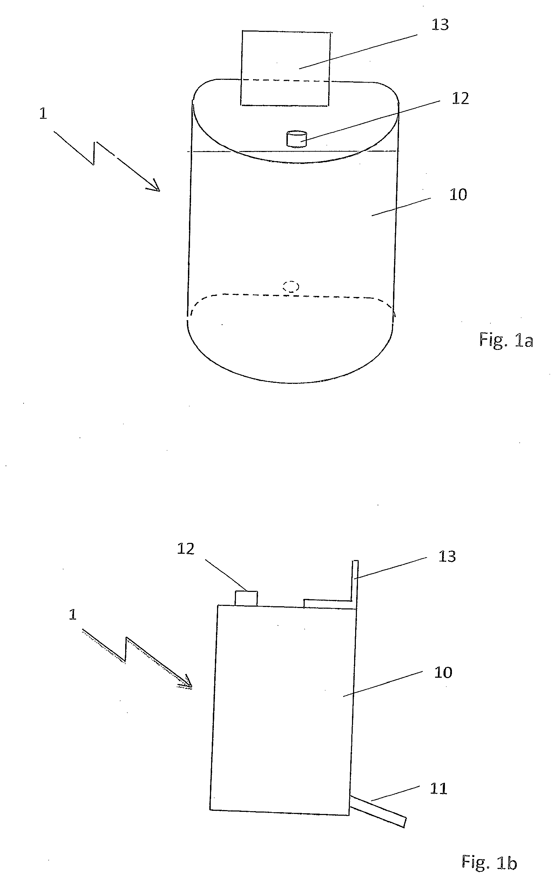

En référence à la figure 1, suivant un premier mode de réalisation, le dispositif 1 comporte un récipient rigide 10.

A la base de ce récipient 10 figure une aiguille creuse 11 prévue pour être plantée dans le tronc de l'arbre à traiter qui n'est pas représenté. Cette aiguille 11 qui fait saillie à l'extérieur du récipient 10 permet la distribution à un très faible débit du liquide de traitement contenu dans le récipient.

A titre d'exemple, l'aiguille présente un diamètre externe de 2,5 mm et un diamètre interne de 1 mm. Il s'agit là, classiquement d'une aiguille cylindrique à section circulaire. Naturellement, toute autre forme d'aiguille se prête à la mise en œuvre de l'invention. Par aiguille, il faut entendre un conduit dont la section interne est relativement limitée.

L'aiguille 11 est fixée soit de manière permanente, soit de manière amovible, par vissage à titre d'exemple.

Au sommet du récipient 10 figure un orifice 12. Cet orifice 12 peut être utilisé pour le remplissage du récipient 10, auquel cas il peut être muni d'un capuchon non représenté. Il peut aussi être utilisé comme évent permettant l'entrée d'air dans le récipient 10 pour faciliter l'écoulement du liquide de traitement. Dans ce cas, il suffit de retirer le capuchon, ou bien alors de prévoir un trou dans ce capuchon.

Toujours au sommet du récipient 10, figure une patte souple 13. Cette patte qui prend donc appui sur le récipient 10 dépasse de son bord destiné à venir au contact du tronc de l'arbre à traiter. Ce bord est d'ailleurs le même que celui dont l'aiguille 11 fait saillie. Cette patte 13 est souple de sorte que l'on puisse aisément la fixer au tronc avec une colle à prise très rapide. On peut encore envisager la fixation au moyen d'un ruban adhésif double face.

Optionnellement, le récipient 10 comporte deux pattes relativement longues de sorte que l'on puisse les nouer autour du tronc ou du cep de vigne.

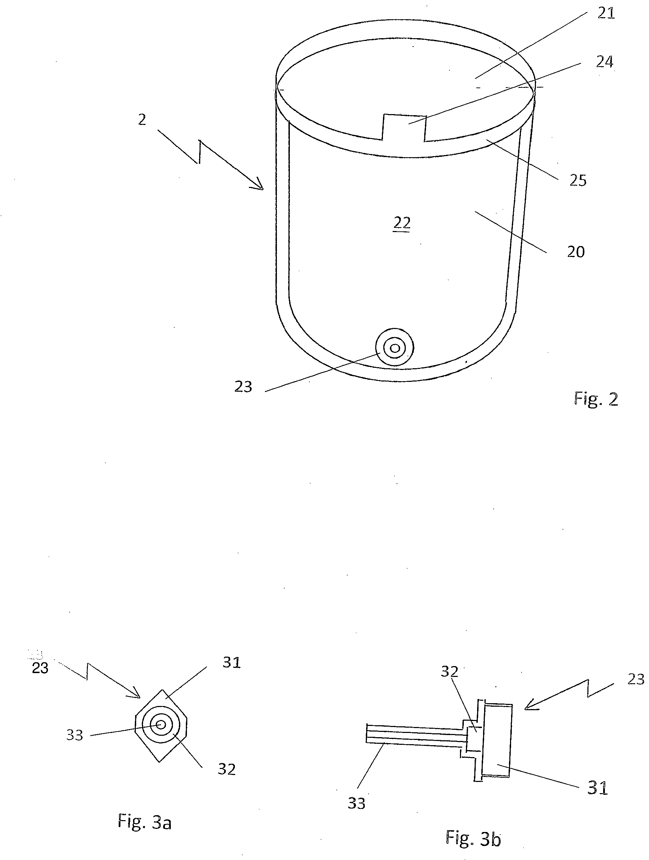

En référence à la figure 2, suivant un deuxième mode de réalisation, le dispositif 2 comporte un récipient souple 20.

Ce récipient 20 est similaire aux gourdes de compote que l'on trouve dans le commerce.

Il est par exemple réalisé en soudant plusieurs feuilles de plastique le long de leurs pourtours. Le plastique employé est avantageusement du polyéthylène.

Dans la figure 2, ce récipient 20 comprend 3 feuilles, l'une 21 pour le sommet et deux pour les parois latérales dont une seule 22 est visible sur cette figure.

Au fond du récipient 20, à l'opposé de son sommet, figure une embase 23 qui supporte l'aiguille de distribution qui là encore fait saillie à l'extérieur du récipient. Cette embase 23 est détaillée dans la figure 3. Elle est avantageusement, elle aussi, en polyéthylène

Toujours sur la figure 2, au sommet du récipient 20, figure une patte de fixation 24. Cette patte 24 fait saillie vers le haut du récipient 20 de sorte que l'emplacement pour la fixation ne soit pas trop réduit. Il s'agit là d'une facilité mais la patte pourrait consister uniquement dans le chevauchement de la feuille du sommet 21 et de celle de la paroi latérale 22, au niveau de la soudure 25 de ces deux feuilles.

En référence à la figure 3, on donne un exemple d'embase. Cette embase 23 comporte un socle 31. Sur ce socle 31 figure un cylindre 32 et sur ce cylindre 32 est fixée une aiguille 33. Cette aiguille 33 est de même nature que celle présentée en référence à la figure 1. Dans le cas présent, l'axe de l'aiguille 33 coïncide avec l'axe de l'embase. Il pourrait toutefois en être autrement.

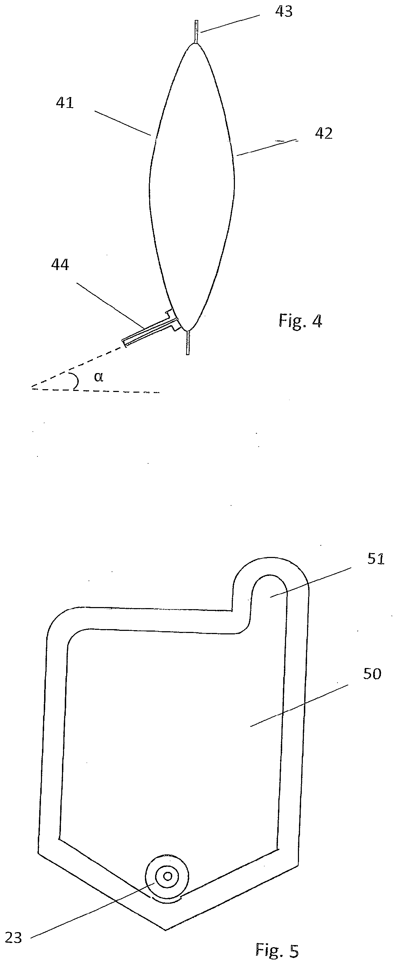

En référence à la figure 4, le récipient est maintenant constitué seulement de deux feuilles, c'est-à-dire qu'on a supprimé la feuille de sommet pour conserver uniquement les deux feuilles latérales 41, 42.

Le recouvrement 43 de ces deux feuilles 41, 42 en haut du récipient constitue la patte de fixation.

Lorsque le récipient est dans sa position normale d'utilisation, c'est-à-dire lorsqu'il figure dans un plan sensiblement vertical, l'aiguille 44, qui fait toujours saillie à l'extérieur de ce récipient, présente un angle d'inclinaison α avec l'horizontale. Cet angle α est de préférence compris entre 0 et 45°.

En référence à la figure 5, le récipient comporte toujours deux feuilles et sa base présente une forme d'entonnoir. Au pied de l'entonnoir figure l'embase 23. Au sommet du récipient 50, apparaît une protubérance 51 qui fait saillie du corps de ce récipient. Cette protubérance peut être facilement coupée pour ménager un évent dans le récipient 50.

Alternativement, pour former un évent, on peut soit percer le récipient 50, soit en couper un angle à proximité de son sommet

Le récipient est avantageusement rempli en usine avant d'être définitivement scellé.

Pour que le dispositif soit étanche lors de son stockage et de son transport, l'aiguille est obturée par tout moyen connu de l'homme du métier ou bien elle est avantageusement sécable, c'est-à-dire qu'elle est bouchée à son extrémité libre. Il suffit de couper ou de casser cette extrémité avant la mise en service du dispositif.

Jusqu'à présent, on a présenté un récipient rigide ou un récipient souple. L'invention s'applique également si ce récipient est semi-rigide. Elle s'applique aussi si la constitution de ce récipient est mixte. A titre d'exemple, on peut envisager un récipient dont la base sur laquelle est fixée l'embase est rigide et dont le corps est souple.

Le dispositif objet de la présente invention offre de nombreux avantages :
- coût de fabrication très bas,
- industrialisation simple,
- rapidité de pose et de dépose,
- recyclable en totalité.

Les exemples de réalisation de l'invention présentés ci-dessus ont été choisis eu égard à leurs caractères concrets. Il ne serait cependant pas possible de répertorier de manière exhaustive tous les modes de réalisation que recouvre cette invention. En particulier, tout moyen décrit peut être remplacé par un moyen équivalent sans sortir du cadre des revendications suivants.

## Revendications

1. Dispositif de distribution d'un liquide dans un cep de vigne ou un tronc d'arbre, ledit dispositif comportant un récipient (10, 20, 50) qui communique avec une première extrémité de ladite aiguille (11, 33, 44) assujettie de manière permanente à la base dudit récipient, ladite aiguille ayant une seconde extrémité qui saille à l'extérieur dudit récipient de sorte à planter ladite seconde extrémité de ladite aiguille dans ledit cep de vigne ou ledit tronc d'arbre pour distribuer ledit liquide,
**caractérisé en ce que** ledit récipient (10, 20, 50) est muni d'au moins une patte souple (13, 24, 43) destinée à venir au contact dudit cep de vigne ou dudit tronc d'arbre pour directement fixer ledit récipient (10, 20, 50) audit cep de vigne ou audit tronc d'arbre.

2. Dispositif de distribution selon la revendication 1, **caractérisé en ce que** ledit récipient (20, 41-42, 50) est souple, ladite patte (24, 43) étant solidaire de ce récipient.

3. Dispositif de distribution selon la revendication 1, **caractérisé en ce que** ledit récipient comporte une base rigide et un corps souple.

4. Dispositif de distribution selon l'une quelconque des revendication 2 ou 3, **caractérisé en ce que** ladite aiguille (33, 44) est fixée sur une embase (23) solidaire dudit récipient (20, 41-42, 50).

5. Dispositif de distribution selon la revendication 4, **caractérisé en ce que** ladite embase (23) est soudée audit récipient (20, 41-42, 50).

6. Dispositif de distribution selon l'une quelconque des revendications 2 à 5, **caractérisé en ce que** ledit récipient (20, 41-42, 50) est formé par une pluralité de feuilles qui sont soudées à leur périphérie.

7. Dispositif de distribution selon la revendication 6, **caractérisé en ce que** ladite patte (43) est formée par une bordure de l'une au moins desdites feuilles.

8. Dispositif de distribution selon l'une quelconque des revendications 2 à 7, **caractérisé en ce que** ledit récipient (50) est muni d'une protubérance (51) sécable.

9. Dispositif de distribution selon l'une quelconque des revendications précédentes, **caractérisé en ce que** l'extrémité libre de ladite aiguille (33, 44) est sécable.

10. Dispositif de distribution selon la revendication 1, **caractérisé en ce que** ledit récipient est pourvu d'un évent.

11. Dispositif de distribution selon l'une quelconque des revendications précédentes **caractérisé en ce que**, lorsque le récipient (20, 41-42, 50) est disposé verticalement, aiguille (33, 44) en bas, l'axe de cette aiguille est agencée pour présenter un angle d'inclinaison (α) compris entre 0 et 45° avec l'horizontale.

## Patentansprüche

1. Flüssigkeitsspendevorrichtung in einem Rebstock einer Rebe oder einem Baumstamm, wobei die Vorrichtung ein Behältnis (10, 20, 50) umfasst, das mit einem dauerhaft der Basis des Behältnisses untergeordneten ersten Ende der Nadel (11, 33, 44) in Verbindung steht, wobei die Nadel ein zweites Ende aufweist, welches außerhalb des Behältnisses derart vorsteht, dass das zweite Ende der Nadel in den Rebstock der Rebe oder den Baumstamm zum Verteilen der Flüssigkeit eingesetzt ist,
**dadurch gekennzeichnet,**
**dass** das Behältnis (10, 20, 50) mit wenigstens einer nachgiebigen Lasche (13, 24, 43) versehen ist, die dazu bestimmt ist, mit dem Rebstock der Rebe oder dem Baumstamm in Kontakt zu gelangen, um das Behältnis (10, 20, 50) direkt an dem Rebstock der Rebe oder dem Baumstamm zu befestigen.

2. Spendevorrichtung nach Anspruch 1, **dadurch gekennzeichnet, dass** das Behältnis (20, 41-42, 50) nachgiebig ist, wobei die Lasche (24, 43) mit dem Behältnis fest verbunden ist.

3. Spendevorrichtung nach Anspruch 1, **dadurch gekennzeichnet, dass** das Behältnis eine steife Basis und einen nachgiebigen Korpus umfasst.

4. Spendevorrichtung nach einem der Ansprüche 2 oder 3, **dadurch gekennzeichnet, dass** die Nadel (33, 44) auf einem mit dem Behältnis (20, 41-42, 50) fest verbundenen Sockel (23) befestigt ist.

5. Spendevorrichtung nach Anspruch 4, **dadurch gekennzeichnet, dass** der Sockel (23) mit dem Behältnis (20, 41-42, 50) verschweißt ist.

6. Spendevorrichtung nach einen der Ansprüche 2 bis 5, **dadurch gekennzeichnet, dass** das Behältnis (20, 41-42, 50) durch eine Mehrzahl von Blättern gebildet ist, die an ihrem Rand verschweißt sind.

7. Spendevorrichtung nach Anspruch 6, **dadurch gekennzeichnet, dass** die Lasche (43) durch einen Rand von wenigstens einem der Blätter gebildet ist.

8. Spendevorrichtung nach einen der Ansprüche 2 bis 7, **dadurch gekennzeichnet, dass** das Behältnis (50) mit einem trennbaren Vorsprung (51) ausgestattet ist.

9. Spendevorrichtung nach einem der vorhergehenden Ansprüche, **dadurch gekennzeichnet, dass** das freie Ende der Nadel (33, 44) trennbar ist.

10. Spendevorrichtung nach Anspruch 1, **dadurch gekennzeichnet, dass** das Behältnis mit einer Entlüftung versehen ist.

11. Spendevorrichtung nach einem der vorhergehenden Ansprüche, **dadurch gekennzeichnet, dass**, wenn das Behältnis (20, 41-42, 50) vertikal angeordnet ist, mit Nadel (33, 44) unten, die Achse der Nadel angeordnet ist, um einen Neigungswinkel (α) aufzuweisen, der zwischen 0 und 45° zur Horizontalen umfasst ist.

## Claims

1. A dispenser device for dispensing a liquid into a vine plant or a trunk of a tree, said the device comprising a container (10, 20, 50) that communicates with a first extremity of a needle (11, 33, 44) that is fastened in permanent manner to the bottom of said container, said needle having a second extremity that projects to the outside of said container such as to be driven said second extremity of said needle onto said vine plant or said trunk of said tree for dispensing said liquid, **characterized in that** said container (10, 20, 50) is provided with at least one flexible tab (13, 24, 43) that come directly into contact with said vine plant or said trunk of said tree for directly fastening said container (10, 20, 50) to said vine plant or said trunk of said tree.

2. The dispenser device according to claim 1, **characterized in that** said container (20, 41 - 42, 50) is flexible, said tab (24, 43) being secure with the container.

3. The dispenser device according to claim 1, **characterized in that** said container has a rigid bottom and a flexible body.

4. The dispenser device according to claim 2 or claim 3, **characterized in that** said needle (33, 44) is fastened on a base (23) secured to said container (20, 41 - 42, 50).

5. The dispenser device according to claim 4, **characterized in that** said base (23) is heat sealed to said container (20, 41 - 42, 50).

6. The dispenser device according to any one of claims 2 to 5, **characterized in that** said container (20, 41 - 42, 50) is formed by a plurality of sheets that are heat sealed together at their peripheries.

7. The dispenser device according to claim 6, **characterized in that** said tab (43) is formed by a margin of at least one of said sheets.

8. The dispenser device according to any one of claims 2 to 7, **characterized in that** said container (50) is provided with a protuberance (51) that is separable.

9. The dispenser device according to any preceding claims, **characterized in that** the free end of said needle (33, 44) is separable.

10. The dispenser device according to claim 1, **characterized in that** said container is provided with a vent.

11. The dispenser device according to any preceding claims, **characterized in that**, when the container (20, 41 - 42, 50) is arranged vertically with the needle (33, 44) at the bottom, the axis of the needle is arranged so as to present an angle of inclination (α) lying in the range 0 to 45° with the horizontal.
